# EUROPEAN PATENT SPECIFICATION

(11) **EP 0 383 615 B1**
(45) Date of publication and mention of the grant of the patent: **18.11.1993**
(21) Application number: 90301683.0
(22) Date of filing: 16.02.1990
(51) Int. Cl.: B65G 47/70, B65G 47/68, B65G 43/08, B65G 47/31

(54) **Conveyors having induction from plural lines**
Förderer, gespeist von mehreren Bahnen
Convoyeurs alimentés par plusieurs couloirs

(30) Priority: 16.02.1989 US 311826
(43) Date of publication of application: 22.08.1990
(73) Proprietor: MANNESMANN Aktiengesellschaft, 40027 Düsseldorf (DE)
(72) Inventor: Doane, Martin Ray, Ada, Michigan 49301 (US); Khodor, Ahmad, Grand Rapids (US)
(74) Representative: Robinson, Anthony John Metcalf

(56) References cited:
- EP-A- 0 130 810
- EP-A- 0 274 229
- FR-A- 2 336 984
- FR-A- 2 581 215
- GB-A- 1 587 715
- US-A- 3 223 225

## Description

This invention relates to conveyor systems and in particular to conveyer systems of the type that include the merging of packages from multiple feed lines and subsequent sortation to multiple distribution lines.

In a warehouse, such as a trans-shipment distribution warehouse, packages are unloaded from trucks or rail cars bringing product from various sources and reorganized, for example, either according to product groupings, for storage of like products in common areas of a warehouse, or according to a particular ultimate destination for reloading onto a trailer or the like. A conveyor system for accommodating this activity conventionally includes many infeed spurs which converge and merge the packages into a single-file of product. The single-filed product is then sorted package by package onto sortation take-away spur lines by a sortation subsystem.

In order to sort packages on the sortation subsystem, it is necessary that the packages be separated by a gap of sufficient length to allow a mechanical sortation mechanism to remove individual packages from the sortation conveyor at the desired point. While a suitable spacing, or gap, is required between packages, any spacing larger than that required to operate the sortation subsystem decreases the capacity of the conveyor system to convey packages.

One known technique for establishing gaps between packages is to discharge the stream of packages from an accumulating conveyor onto a series of belts of increasing speed. As the package discharges from one belt to the next, it is accelerated and spaced from the subsequent package. The difficulty of such a known system is that the gap is proportional to the length of the package, which requires system parameters to properly gap the smallest packages while providing wasteful large gaps between longer packages.

Another difficulty that must be addressed in such a system is the merging of packages into a single file for sortation. Because warehouse floor space is usually at a premium, it is disadvantageous to provide an accumulation conveyor between a completely merged line of packages and the sortation subsystem because the required length of the accumulation conveyor would be great.

US-A-3223225 discloses the features of the precharacterising portions of the independent claims of the present invention. A plurality of conveyors carry articles to a common conveyor. The positions of the articles on the pre-merged conveyors are detected and, when a collision of two articles on separate conveyors would occur, one article is delayed or, in another embodiment, accelerated to prevent collision of the articles. Article detectors, such as photoelectric relays energized by light sources, are used to detect the articles' positions.

In EP-A-0130810, a conveyor sorting system includes a plurality of feed conveyors and respective detecting means at each of the feed conveyors.

The detecting means comprise light source and photo electric detector units. A parcel may only continue past a detector at normal speed firstly if none of the other detectors is detecting the presence of a parcel and secondly if the trailing edge of the last parcel to be released has travelled a sufficient distance to provide a minimum gap between the two parcels when merged on the main conveyor. The time when each parcel should reach a detector downstream on the main conveyor can be predicted from the leading edge information provided by the detectors at the feed conveyors.

However, these documents do not disclose sortation systems which provide optimum sortation for articles.

It is an object of the present invention to overcome the disadvantages of the prior art.

According to a first aspect of the present invention, there is provided a conveyor system with the features of Claim 1.

Preferably, the speed controlling means includes means for operating each of said conveying means at at least two running speeds greater than zero; and the actuating means includes means for selecting between the said two running speeds for each of the conveying means.

According to a second aspect of the invention, there is provided a conveyor system with the features of Claim 7.

It will be appreciated that the invention makes it possible to merge the infeed lines into two feed lines each having a short accumulation conveyor and provide the final merge immediately upstream of the sortation subsystem. This is achieved according to the present invention by combining the functions of the final merging of two or more feed lines with that of spacing of packages in an individual operation in which packages are inducted from a plurality of feed lines in a manner that desirable spacing is provided between the packages regardless of package size. It is possible, by means of the present invention, to further provide a controlled spacing induction subsystem which produces a greater through-put, or flow of packages through the system, while reducing the required speed of the feed lines and system down time. Additionally, damage to packages may be significantly reduced.

The invention may be carried into practice in various ways but one conveyor system embodying the invention, together with its mode of operation, will now be described by way of example with reference to the accompanying drawings, in which:

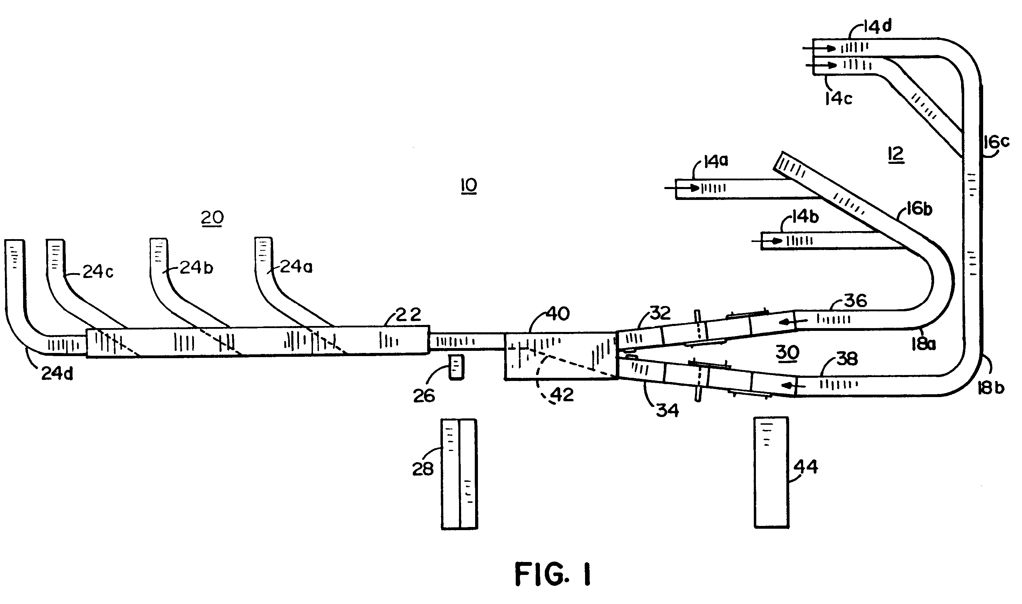

Fig. 1 is a plan view of the conveyor system;
Fig. 2 is a plan view of the multiple line induction subassembly included in the system;
Fig. 3 is a circuit diagram in block diagram form of an interface circuit between the microcomputer and servo motor control in the system;
Figs. 4a and 4b are a logic flow diagram of the program used to control the microcomputer; and
Fig. 5 is a diagram of the conveying means speed for the induction subassembly of the system.

Referring now specifically to the drawings, and the illustrated embodiments depicted therein, a conveyor system generally illustrated at 10 includes an infeeding subsystem 12 having a plurality of infeed conveyor lines 14a to 14d. Infeed line 14a merges with another infeed line (not shown) at junction 16a and with infeed line 14b at junction 16b to form a combined feed line 18a. Infeed lines 14c and 14d combine at junction 16c to form a combined feed line 18b. Conveyor system 10 further includes a sortation subassembly 20 including a sortation conveyor 22 and a plurality of take-away lines 24a to 24e. The sortation subassembly 20 may further include a laser scanner 26 for encoding bar-codes from packages entering conveyor 22 into a sortation controller 28, which compares each product bar-code with a table stored in memory to determine the appropriate take-away line 24a to 24e to dispatch the package to and to actuate a take-away device (not shown) at the required time to unload the package from the sortation conveyor 22 to the appropriate take-away line 24a to 24e.

Conveyor system 10 further includes a multiple line induction subassembly 30 which, in the illustrated embodiment, includes a first induction line 32 and a second induction line 34. Although the invention is illustrated in an induction subassembly having two induction lines, it is capable of implementation in a system having more than two induction lines. Feed line 18a is joined with first induction line 32 by a dynamic accumulator 36 which accumulates product awaiting entry to first induction line 32. A dynamic accumulator 38 is positioned between infeed line 18b and second induction line 34. An alignment conveyor 40 receives packages discharged from induction lines 32 and 34 and provides a guide bar 42 for laterally shifting packages discharged from line 34 into a single file with packages discharged from line 32. Packages are discharged from alignment conveyor 40 onto sortation conveyor 22. Induction subassembly 30 further includes a control 44 which receives inputs from input devices associated with induction lines 32 and 34 and produces outputs for controlling the speeds of lines 32 and 34. Control 44 may additionally interface with sortation controller 28 and other control portions of the conveyor system 10.

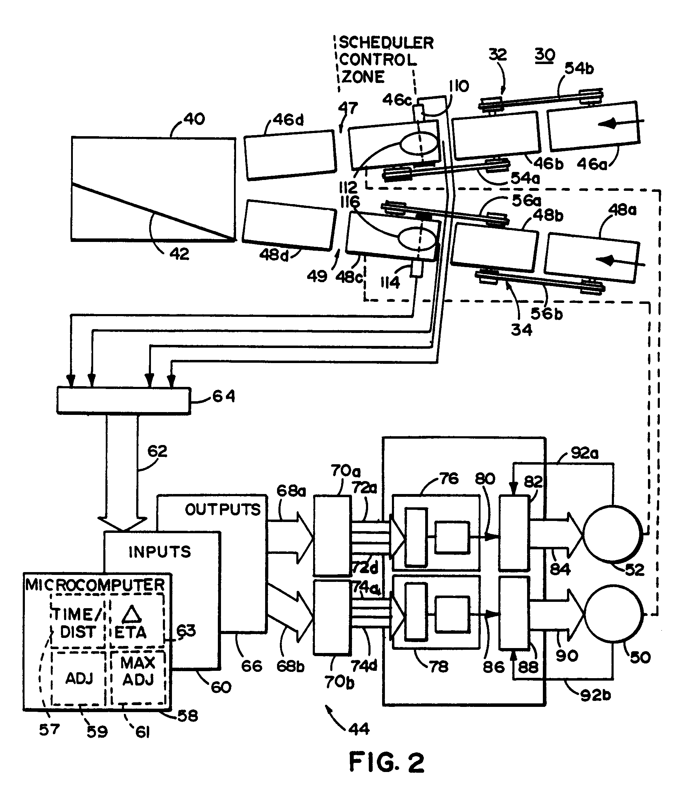

Each induction line multiple line induction subassembly 30 includes four belt conveyors designated 46a to 46d for first induction line 32 and 48a to 48d for induction line 34 (Fig. 2). Belt conveyor 46c is driven from an AC servo motor and reducer assembly 50 and belt conveyor 48c is independently operated by an AC servo motor and reducer assembly 52. Belt conveyor 46b is driven by a speed reducer 54a mechanically coupled with belt 46c and belt conveyor 46a is driven by a speed reducer 54b driven from conveyor 46b. Speed reducers 54a and 54b are each configured to reduce the speed of the driven conveyor to 70% of the driving conveyor. In this manner, belt conveyor 46b is driven at 70% of the speed of conveyor 46c and conveyor 46a is driven at 70% of the speed of conveyor 46b. Likewise, belt conveyor 48b is driven at 70% of the speed of belt conveyor 48c by speed reducer 56a and belt conveyor 48a is driven at 70% of the speed of belt conveyor 48b by speed reducer 56b.

Belt conveyors 46d and 48d are operated at fixed speeds identical with alignment conveyor 40 and are independent of the speeds of conveyors 46a-46c and 48a-48c. In the illustrated embodiment, conveyors 40, 46d and 48d are driven at 107 metres per minute, which is the same speed as sortation conveyor 22, and conveyors 46c and 48c are operable at three discrete running speeds: 0 mpm, 107 mpm and 183 mpm. Although conveyors 46c and 48c are operable at three discrete running speeds, servo motors 50 and 52 are capable of linear speed adjustment over a wide range of speed and are controlled in a manner that provides uniform acceleration and deceleration between discrete running speed levels at a level that is preselected to avoid overturning a package and avoiding slippage between the packages and the belts.

Control 44 includes a microcomputer 58 having an input circuit board 60 which receives parallel inputs 62 from an input module 64. Microcomputer 58 additionally includes an output circuit board 66 which provides parallel outputs 68a to an output module 70a and parallel outputs 68b to an output module 70b. Microcomputer 58, in the illustrated embodiment, is a commercially available microcomputer sold by Winn Systems and based on a 16 bit V50 microprocessor which is a derivative of the Intel 8086 family of microprocessors. Input board 60 is a 48 channel parallel input card having a standard bus interface with microcomputer 58. Input module 64 and output modules 70a and 70b may be any suitable commercially available interface modules. Output board 66 is a 48 channel parallel output card having a standard bus interfaced with microcomputer 58. Output module 70a provides output signals on four parallel lines 72a to 72d that are presented to a servo interface circuit 76 as selection lines for one of four running speeds for servo motor 52, although only three running speeds are used in the illustrated embodiment. Output module 70b provides output signals on lines 74a to 74d that are presented to a servo interface circuit 78 as running speed selection lines for servo motor 50. Servo interface circuit 76 produces a DC analog voltage output on line 80 which is provided as a velocity command to a servo motor controller 82. Controller 82 produces multi-phase AC outputs 84 to control the direction of rotation and velocity of servo motor 52, although only one direction of rotation is used in the illustrated embodiment. Likewise, servo interface circuit 78 provides an analog DC voltage output on a line 86 which is provided as a velocity command to a servo motor controller 88, which produces multi-phase AC outputs 90 to servo motor 50. Feedback lines 92a, from servo motor 52 to controller 82, and 92b, from servo motor 50 to controller 88, provide velocity feedback signals to the controllers to effect velocity control of the motors. The servo motor controllers and servo motors are commercially available in a prepackaged system sold by Allen Bradley, Model No. 1391-AA45.

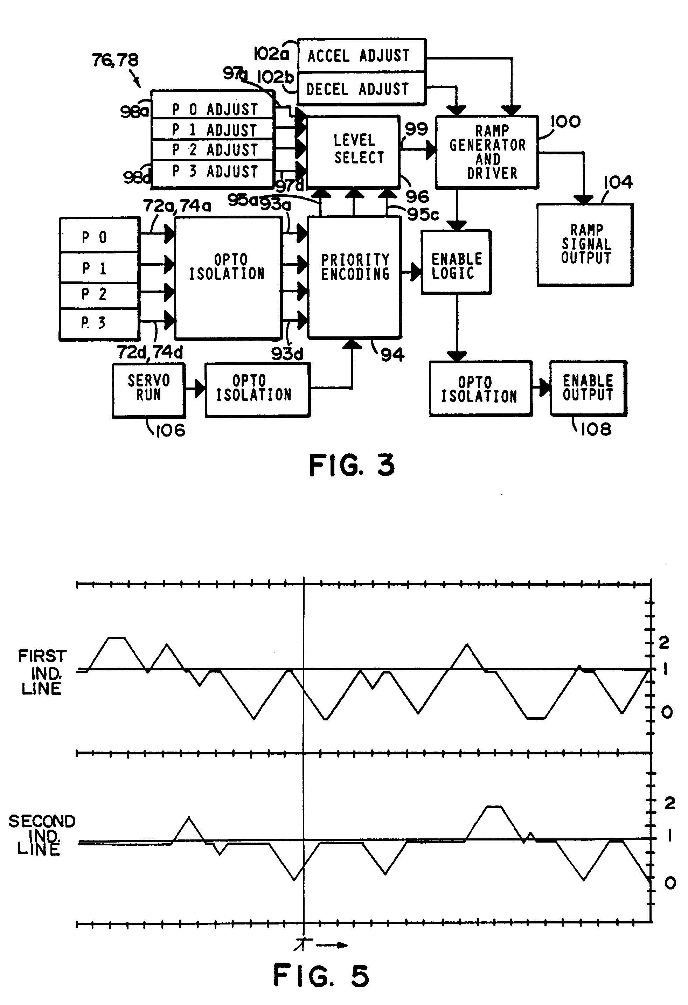

A block diagram for servo interface circuits 76 and 78 is illustrated in Fig. 3. Speed-select lines 72a to 72d or 74a to 74d are optically isolated and provided to a priority encoding circuit 94. Priority encoding circuit 94 compares the current speed-select inputs with the immediately previous speed-select inputs and selects a new running speed on a priority basis with higher speeds having priority. Priority encoding circuit 94 interprets no input signal from 72a-72d or 74a-74d as a zero speed, or brake selection. Outputs from priority encoding circuit 94 are provided to a level-select circuit 96 which also receives manually-settable voltage settings from devices 98a to 98d corresponding to four selectable running speed levels. The output from level-select circuit 96 corresponds to the voltage level set by the adjusting means 98 corresponding to the speed selected by encoding circuit 94 and provides an output to a ramp generator and driver circuit 100, which additionally receives manually- settable ramp adjustment inputs from devices 102a and 102b. Ramp adjustment devices 102a and 102b determine the slopes of the analog voltage ramps between speed changes, which determine the acceleration and deceleration forces exerted on the packages. In the preferred embodiment, adjustment devices 102a and 102b are set to produce a maximum 0.5g acceleration/deceleration force on the packages. Ramp generator and driver circuit 100 produces a ramp signal output 104 which is provided on line 80 or 86 to the respective servo motor controller. Servo interface circuit 76, 78 additionally receives a servo run interlock input 106 from other portions of the conveyor system to actuate the servo interface circuit and additionally produces an enable output 108 to release the brake for the respective servo motor when a non-zero speed is selected.

Operation of servo interface circuits 76 and 78 and their respective servo motors may be understood by reference to Fig. 5 in which a chart of line speed versus time is illustrated for first induction line 32 and second induction line 34. The abscissa represents time and the ordinate represents line speed with 0 indicating a stopped condition, 1 indicating nominal running speed and 2 representing a second selectable running speed that is higher than speed 1. The flat portions of each curve represent constant conveyor speeds and the sloping portions represent acceleration (sloping upwardly from left-to-right) and deceleration (sloping downwardly from left-to-right). Thus it may be observed that, although each induction line has three selectable running speeds, a large portion of time is spent accelerating or decelerating between running speeds.

Input module 64 receives two inputs from each induction line. A first input for conveyor 46c is received from a photo eye 110 projecting a beam which is blocked by the presence of a package in its path on the conveyor. A second input from conveyor 46c is provided from a position detector 112 which outputs a pulse to input module 64 having a signal transition every 12.7 mm travel of the belt of conveyor 46c. Likewise, a photo eye 114 is associated with belt 48c and projecting a beam blocked by a package in its path on conveyor 48c. Conveyor 48c further includes a position sensor 116 which outputs a pulse to input module 64 for every 12.7 mm travel of the belt of conveyor 48c.

Packages entering first induction line 32 from accumulator 36 are accelerated from belts 46a to 46b and from belts 46b to 46c to establish a preliminary gap, or spacing, between the packages. As a package traverses conveyor 46c, its leading edge will initiate blockage of the beam of photo eye 110 which will initiate execution of a control routine in microcomputer 58. As the package continues to traverse conveyor 46c, its trailing edge will allow reestablishment of the beam of photo eye 110, which will again initiate execution of a control routine in microcomputer 58. As the package continues to traverse belt 46c, its longitudinal centre will eventually reach the discharge interface 47 between belts 46c and 46d at which point the package will be half on conveyor 46c and half on conveyor 46d. Once a package is more than half on conveyor 46d, its rate of travel is presumed to be controlled by the speed of belt 46d. At that point in time, the package is said to be released from the first induction line 32 and another execution of a control routine is initiated in microcomputer 58.

The sequence of events that occurs for packages traversing first induction line 32 from accumulator 36 occur in an essentially identical fashion for packages traversing second induction line 34 from accumulator 38. Although the speed of conveyor belts 46a, 46b and 46c are fixedly interrelated, the speeds of conveyors 48a, 48b and 48c are fixedly interrelated and conveyors 46d, 48d and 40 are operated at fixed speeds, the relative speeds between conveyors 46a to 46c, conveyors 48a to 48c and conveyors 46d, 48d and 40 are continually changing in a manner that will now be set forth.

Beginning when a package enters conveyor 46c from conveyor 46b and blocks the beam of photo eye 110, likewise, when a package enters conveyor 48c and blocks the beam of photo eye 114, various parameters relating to the package are monitored and updated in microcomputer 58. During this period, each package is under the precise control of a package scheduler program 120 which, through a series of control routines, manipulates on a real-time basis the instantaneous speeds of servo motors 50 and 52 to cause packages to be discharged from conveyors 46c and 48c to receiving conveyors 46d and 48d in a manner that will cause the packages to have a desired gap or spacing therebetween as the packages traverse belt 40 toward the sortation system. When the package is discharged to receiving conveyor 46d or 48d, the parameters relating to the package are cleared from the microcomputer. While, in the illustrated embodiment, the desired package spacing is a predetermined fixed spacing, in certain applications it may be desired to provide a desired spacing that relates to another parameter, such as the width of the package.

It is important to an understanding of the invention to recognize that more than one package may be within the scheduler control zone under the control of microcomputer 58 for each induction line at any one time and that the discharging of packages from first and second induction lines 32 and 34 is not necessarily in an alternating sequence. Rather, in essence, the control routine 120, on an event driven basis, repetitively determines the estimated time of arrival (ETA) of each package within the control zone, the necessary adjustment to the speed of each servo motor 50, 52 to cause each package to arrive at the point of discharge 47, 49 at a desired time to provide desired spacing and which line is capable of causing its respective packages to arrive closest to the desired time, taking into account restraints on the amount of adjustment that may be made in the ETA of each package. When the selection has been made of the package to be discharged next (the priority package), the desired time for arrival of the remaining packages in the control zone are adjusted accordingly and physical adjustments in the speeds of motors 50 and 52 are effected.

It bears repeating that the control routine is event-driven. Each time that a package blocks the photo eye, unblocks the photo eye, is discharged from the control zone, and each time a speed adjustment is effected, the control routine is executed. Therefore, the decision of which package from which line is the priority package and what speed adjustment to make on each induction line is reevaluated repetitively. It has been found that by so doing, the illustrated conveyor system operates at a much higher rate of package through-put.

For each package that enters the scheduler control zone by arriving at photo eye 110 or 114 a memory file in microcomputer 58 is opened for the following parameters of the package:
Package Length
Current Estimated Time of Arrival (CURRENT ETA)
Suggested Estimated Time of Arrival (SUGGESTED ETA)
Current Adjustment Specified for the Package (CURRENT ADJ)
New Adjustment Specified for the Package (NEW ADJ)
Elapsed Adjustment for the Package (ELAPSED ADJ)
Desired Gap
Position of Package on Conveyor

As previously set forth, more than one package may be within the scheduler control zone for each induction line and the memory space for each package is freed as the package is discharged onto the respective receiving conveyor. The most downstream package for each induction line is considered the "top of the line" package for that line.

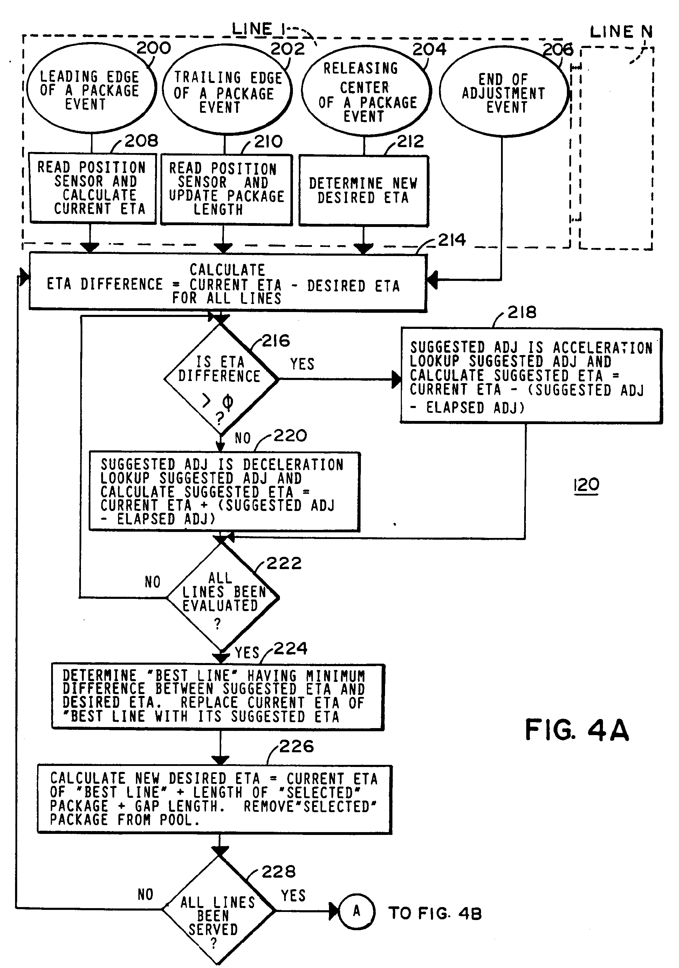

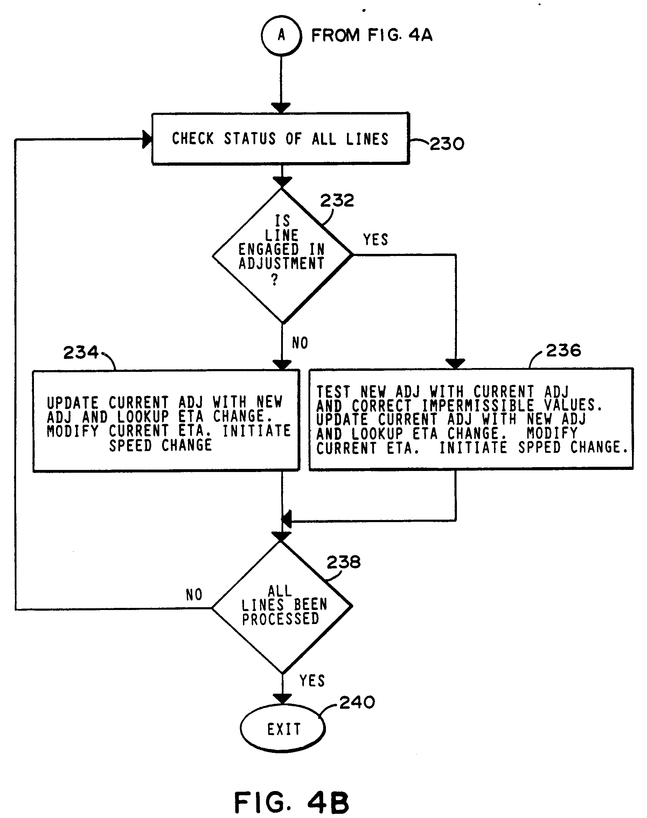

A discussion of the package scheduler software routine 120 is made in reference to Figs. 4a and 4b. Software routine 120 is event driven, which means that the software routine illustrated in Figs. 4a and 4b is executed in response to an occurrence of an event in real time on induction line 32 or 34 or, if n induction lines are provided, then such an event on any of lines 1 to n will invoke execution of the software routine. Routine 120 is executed, with respect to the first induction line (line 1) at 200 in response to the breaking of the light beam from photo eye 110, at 202 in response to the reestablishment of the light beam of photo eye 110 at the trailing edge of a package, at 204 upon the release of a package to receiving conveyor 46d and at 206 upon completion of an adjustment of the speed of conveyor 46c.

When the execution of routine 120 is initiated at 200 upon the leading edge of a package event, position sensor 112 is read at 208 and a CURRENT ETA is calculated for the package breaking the light beam. The CURRENT ETA is calculated by combining the length of conveyor 46c between photo eye 110 and its discharge point 47 with one-half of the length of the package. Because the length of the package is not known to the system at this point, a default value is assigned for package length. If the execution of routine 120 is initiated at 202 in response to the trailing edge of a package event, the position sensor 112 is read at 210 and the default value of package length is replaced by the actual length of the package. When execution of routine 120 is initiated by releasing a package event at 204, the program determines at 212 the ETA of the next package that would be optimal on the basis of the length of the package being discharged and the desired spacing between packages (DESIRED ETA).

Control passes from blocks 206, 208, 210 or 212 to block 214 where the ETA DIFFERENCE is determined for all packages as the difference between the CURRENT ETA stored for each package and the DESIRED ETA for all packages. The DESIRED ETA for all packages is initially established at 212 in response to a package being released from any line at 204 and is updated in a manner set forth below. From block 214 control passes to 216 where it is determined for a particular package whether the ETA DIFFERENCE is positive, i.e., greater than 0. If so, then the package would arrive at the point of discharge too late and control passes to block 218 where an appropriate adjustment for that package (SUGGESTED ADJ) is selected from a lookup table on the basis of the value of the ETA DIFFERENCE. Once the SUGGESTED ADJ is selected, a SUGGESTED ETA is determined for that package as the CURRENT ETA minus SUGGESTED ADJ, from which any elapsed speed adjustments that have already been effected with respect to that package while in the control zone (ELAPSED ADJ) is subtracted. If it is determined at 216 that the ETA DIFFERENCE is less than 0 then control passes to block 220 where an appropriate deceleration adjustment (SUGGESTED ADJ) is selected from a lookup table on the basis of the value of ETA DIFFERENCE. The value of SUGGESTED ETA is calculated as the CURRENT ETA plus the SUGGESTED ADJ minus ELAPSED ADJ.

From block 218 or 220 control passes to block 222 where it is determined whether a SUGGESTED ETA has been calculated for each "top of line" package for each line. If not, control passes to block 216 for determination of the SUGGESTED ETA of the next package. This process continues until a SUGGESTED ETA has been assigned to at least one package on all lines. Some lines will have more than one package with a SUGGESTED ETA assigned to it but all lines having packages will have at least one such package.

When all lines have SUGGESTED ETAs assigned, control then passes from block 222 to block 224 where the control examines the SUGGESTED ETA for all lines and determines the difference between the SUGGESTED ETA for each "top of line" package and the DESIRED ETA for the system. The control selects the line having the minimum difference between SUGGESTED ETA and DESIRED ETA. Any ties are broken by a priority designation that may be fixed to a particular line or may alternate between lines. Once "the "best line" is selected in this manner, the CURRENT ETA is replaced with the SUGGESTED ETA for its "selected" package. Control then passes to block 226 where the DESIRED ETA of the system is updated from the CURRENT ETA of the "selected" package. The new DESIRED ETA will equal the CURRENT ETA of the "selected" package plus one-half of the length of the "selected" package plus the amount of desired gap to follow the "selected" package. This new DESIRED ETA will apply to all packages except for the "selected" package.

After the new DESIRED ETA for the system has been calculated, control passes to block 228 where it is determined whether all of the lines have had at least one package selected. If not, control passes to block 214 where the ETA DIFFERENCE for the leading package that has not been selected for each line is determined based on the difference between the CURRENT ETA of that package and the DESIRED ETA. The SUGGESTED ETA for these packages are again calculated in blocks 216 through 222 and a determination of the next "selected" package is made in block 224. Control then passes to block 226 where the newly "selected" package is removed from the selection pool and a new DESIRED ETA is determined. Control then passes to block 228 where it is determined whether all lines have had at least one package selected. If so, then the system has determined the line that will discharge the next package, the ETA for the "selected" package and the NEW ADJ to each line. However, up to control block 228, the system has merely evaluated data and has not effected any control operations.

Control passes from block 228 to block 230 where the status of all lines are checked for the availability of packages.

Control then passes to block 232 where it is determined whether the line that is being adjusted is presently engaged in an adjustment operation. If not, then control passes to block 234 where the CURRENT ADJ parameter is modified by NEW ADJ and the CURRENT ETA for the line is updated to reflect the new value of CURRENT ADJ. This is accomplished by obtaining an ETA change on the basis of the NEW ADJ in a lookup table. The retrieved change in ETA is applied to the CURRENT ETA to provide an updated CURRENT ETA. The adjustment in belt speed is initiated, or put into effect, at this point of the routine. If it is determined in block 232 that the line is presently engaged in an adjustment operation, control passes to block 236 where the CURRENT ADJ is compared with the NEW ADJ, determined in blocks 214 to 228, and makes minor adjustments to the NEW ADJ to compensate for real-time lapses that have occurred during this execution of the control routine. Additionally, the proposed modification to the CURRENT ADJ required by the NEW ADJ is tested to determine if an impermissible result is obtained. If so, the NEW ADJ is modified to make the CURRENT ADJ a permissible value and the new CURRENT ADJ is calculated. The value of CURRENT ETA is modified in the manner set forth in block 234, to reflect the effect of the NEW ADJ on CURRENT ADJ. The speed modification underway is modified according to the new CURRENT ADJ. The timing of the speed changes is implemented at regular intervals in a routine separate from routine 120 to provide precise timing of the adjustments.

From blocks 234 and 236, control passes to a block 238 where it is determined whether the CURRENT ADJ and CURRENT ETA have been recalculated and the speed adjustment control function put into effect for all lines. If not, control passes to block 230. If it is determined at block 238 that all lines have been processed, then control passes to block 240 where the software awaits another event of the type that will initiate another execution of the routine at one of blocks 200, 202, 204 or 206.

The amount of gap compression between packages is obviously limited at times by the physical parameters of the system, for example a temporary absence of products to induct to the sortation area. The induction subsystem will, however, function to shrink excessive gaps and to stretch gaps that are too short. The present invention increases the capacity, or through-put, of the system while inducting packages from multiple lines. An adjustment to a conveyor running speed is often reversed, cancelled, or extended before it is completely carried out. In this manner, the system repetitively reevaluates the need for adjustments to line speeds and reverses its previous assessment, if warranted, without carrying out adjustments that will merely require compensating adjustments later. By initiating execution of the scheduler routine only upon the occurrence of events, rather than repetitively, the routine is available, without requiring completion of a partial loop through software, in order to react to real-time events and update parameters rapidly. The use of lookup tables to determine suggested adjustments and for modifying the estimated time of arrival to reflect speed adjustments is a further enhancement to the speed of execution of the software routine. However, these determinations could be made by a calculation algorithm.

## Claims

1. A conveyor system comprising: a first conveying line (32) having a package conveying means (46a,b,c) for transporting packages and discharge means (46d) for discharging packages from the first conveying line; a second conveying line (34) having a package conveying means (48a,b,c) for transporting packages and discharge means (48d) for discharging packages from the second conveying line; receiving means (40) associated with the discharge means for both the lines for receiving packages discharged from both the conveying means; control means (44) for controlling both of the conveying lines, the control means comprising means (82,88) for controlling the speed of each of the conveying means, means (110,116) for monitoring movement of packages on each of said conveying means and for actuating said speed control means in a manner to cause packages to reach the discharge means at times that will create gaps between packages received by the receiving means characterised by the control means further including means for determining the moment a package on each of said lines would reach the associated discharge means with the associated conveyor travelling at the present speed, means for determining the amount of speed adjustment that would be required for each speed controlling means to cause the package on each of the lines to reach the associated discharge means at a desired time and for determining which said package would reach the associated discharge means closest to the desired time, and means for causing said speed controlling means for the conveying means having said package which would reach the associated discharge means closest to said desired time to adjust the speed of the associated conveying means, whereby packages are merged onto said receiving means from both said conveying lines with desired gaps between packages.

2. A conveyor system according to Claim 1 in which the speed controlling means includes means for operating each of said conveying means at at least two running speeds greater than zero ; and the actuating means includes means for selecting between the said two running speeds for each of the conveying means.

3. The conveyor system according to Claim 1 or Claim 2 in which the actuating means includes means for selecting between the said two speeds and a third speed for each of the conveying means, the third speed being substantially zero.

4. The conveyor system according to Claim 1 or Claim 2 or Claim 3 in which the actuating means further includes means for controlling the rate of acceleration of the conveying means.

5. A conveyor system according to any one of the preceding claims in which determining means determines said desired time as a function of the time that a previous package to be discharged would reach its associated discharge means and a desired gap to be provided between packages.

6. A conveyor system according to Claim 5 in which the said desired gap is constant for all packages.

7. A conveyor system comprising a plurality of conveying lines (32;34), each of the conveying lines having a package conveying means (46a,b,c;48a,b,c) for transporting packages and discharge means (46d;48d) for discharging packages from the conveying means, and control means (44) for controlling the conveying lines, the control means (44) comprising means (82;88) for controlling the speed of each of said conveying means, and means (110,112;114,116) for monitoring movement of packages on each of the conveying means, characterized in that the control means further comprises means for determining the moment a package on each of the lines would reach the associated discharge means with the associated conveying means travelling at its present speed, means for determining the amount of speed adjustment that would be required for each conveying means to cause the package on each of the lines to reach the associated discharge means as close to a desired time as possible without exceeding a predetermined level of acceleration, means for determining one line whose packages would reach the associated discharge means closest to said desired time and for selecting a new desired time for lines other than said one line as a function of the estimated time the package on the said one line will reach the associated discharge means.

8. The conveyor system according to Claim 7 including means. for causing the speed controlling means to adjust the present speed of the conveying means according to the speed adjustment determined for the associated lines.

9. A conveyor system according to Claim 7 and Claim 8 in which the means for selecting a new desired time includes means for selecting the new time as a function of the desired gap to be provided between packages.

10. A conveyor system according to Claim 9 in which the desired gap is constant for all packages.

11. A conveyor system according to any of Claims 1 to 10 in which the means for monitoring the movement of packages includes package position sensor means (110;114) for sensing the leading and trailing edges of packages on each of the conveying means and means for determining the distance of the centre between said edges from the associated said discharge means.

12. A conveyor system according to Claim 11 in which the means for monitoring further includes means (112;116) for measuring movement of each conveying means.

## Patentansprüche

1. Fördersystem mit einer ersten Förderbahn (32), die eine Packungsfördereinrichtung (46a, b, c) zum Transport von Packungen oder dergleichen sowie Entladeeinrichtungen (46d) zum Entladen der Packungen von der ersten Förderbahn aufweist; einer zweiten Förderbahn (34), die eine Packungsfördereinrichtung (48a, b, c) zum Transport von Packungen oder dergleichen sowie Entladeeinrichtungen (48d) zum Entladen der Packungen von der zweiten Förderbahn aufweist; einer Aufnahmeeinrichtung (40), die mit den Entladeeinrichtungen beider Bahnen verbunden ist, zum Aufnehmen der Packungen, die von beiden Fördereinrichtungen entladen werden; einer Steuereinrichtung (44) zum Steuern beider Förderbahnen, wobei die Steuereinrichtung eine Vorrichtung (82, 88) zum Steuern der Geschwindigkeit von jeder Fördereinrichtung und eine Vorrichtung (110, 116) zum Überwachen der Bewegung der Packungen auf jeder Fördereinrichtung und zum Betätigen der Geschwindigkeitssteuereinrichtung in einer Weise umfaßt, so daß die Packungen die Entladeeinrichtungen zu einer Zeit erreichen, die zu Lücken zwischen den Packungen führt, die durch die Aufnahmeeinrichtung aufgenommen wurden, **dadurch gekennzeichnet, daß** die Steuereinrichtung weiterhin umfaßt eine Vorrichtung zum Bestimmen des Momentes, wann eine Packung auf jeder Bahn die damit verbundene Entladeeinrichtung mit dem damit verbundenen Förderer erreichen würde, der bei der gegenwärtigen Geschwindigkeit läuft, eine Vorrichtung zum Bestimmen des Betrages der Geschwindigkeitseinstellung, der für jede Geschwindigkeitssteuereinrichtung erforderlich ist, damit die Packungen auf jeder Bahn die verbundenen Entladeeinrichtungen zu einer gewünschten Zeit erreichen, und zum Bestimmen, welche Packung die verbundene Entladeeinrichtung am nahesten zu der gewünschten Zeit erreicht, und Vorrichtungen, die veranlassen, daß die Geschwindigkeitssteuereinrichtung für die Fördereinrichtung, die diejenige Packung hat, welche die verbundene Entladeeinrichtung am nahesten zu der gewünschten Zeit erreicht, die Geschwindigkeit der verbundenen Fördereinrichtung einstellt, wodurch die Packungen auf der Aufnahmeeinrichtung von beiden Förderbahnen mit gewünschten Lücken zwischen den Packungen zusammengebracht werden.

2. Fördersystem nach Anspruch 1, in welchem die Geschwindigkeitssteuereinrichtung eine Vorrichtung zum Betreiben jeder Fördereinrichtung bei mindestens zwei Laufgeschwindigkeiten größer als Null einschließt, und wobei die Betätigungseinrichtung eine Vorrichtung zum Wählen zwischen den beiden Laufgeschwindigkeiten für jede Fördereinrichtung einschließt.

3. Fördersystem nach Anspruch 1 oder 2, in welchen die Betätigungseinrichtung eine Vorrichtung umfaßt zum Wählen zwischen den zwei Geschwindigkeiten und einer dritten Geschwindigkeit für jede Fördereinrichtung, wobei die dritte Geschwindigkeit im wesentlichen Null ist.

4. Fördersystem nach Anspruch 1 oder 2 oder 3, in welchem die Betätigungseinrichtung weiterhin eine Vorrichtung zum Steuern der Beschleunigungsrate der Fördereinrichtungen umfaßt.

5. Fördersystem nach einem der vorangegangenen Ansprüche, in welchem die Bestimmungsvorrichtung die gewünschte Zeit in Abhängigkeit von der Zeit bestimmt, in welcher eine vorangehende zu entladende Packung ihre verbundene Entladeeinrichtung erreicht und eine gewünschte Lücke zwischen den Packungen erzielt wird.

6. Fördersystem nach Anspruch 5, in welchem die gewünschte Lücke für alle Packungen konstant ist.

7. Fördersystem mit einer Anzahl von Förderbahnen (32; 34), wobei jede Förderbahn eine Packungsfördereinrichtung (46a,b,c; 48a,b,c) zum Transport von Packungen und dergleichen und Entladeeinrichtungen (46d; 48d) zum Entladen der Packungen von den Fördereinrichtungen und eine Steuereinrichtung (44) zum Steuern der Förderbahnen aufweist, wobei die Steuereinrichtung (44) eine Vorrichtung (82; 88) zum Steuern der Geschwindigkeit von jeder Fördereinrichtung und Vorrichtung (110, 112, 114, 116) zum Überwachen der Bewegung der Packungen auf jeder Fördereinrichtung umfaßt, **dadurch gekennzeichnet,** **daß** die Steuereinrichtung weiterhin umfaßt eine Vorrichtung zum Bestimmen des Momentes, wann eine Packung auf jeder Bahn die verbundene Entladeeinrichtung erreicht, wobei die verbundene Fördereinrichtung bei ihrer gegenwärtigen Geschwindigkeit läuft, und eine Vorrichtung zum Bestimmen des Betrages der Geschwindigkeitseinstellung, die für jede Fördereinrichtung erforderlich ist, damit die Packung auf jeder Bahn die verbundene Entladeeinrichtung so nahe wie möglich an einer gewünschten Zeit erreicht, ohne das ein vorbestimmter Beschleunigungspegel überschritten wird, eine Vorrichtung zum Bestimmen einer Bahn, deren Packungen die verbundene Entladeeinrichtung am nächsten zu der gewünschten Zeit erreicht und zum Auswählen einer neuen gewünschten Zeit für die anderen Bahnen in Abhängigkeit von der geschätzten Zeit, in welcher die Packung auf der einen Bahn die verbundene Entladeeinrichtung erreicht.

8. Fördersystem nach Anspruch 7, das Vorrichtungen umfaßt, die die Geschwindigkeitssteuereinrichtung veranlassen, die gegenwärtige Geschwindigkeit der Fördereinrichtung in Übereinstimmung mit der Geschwindigkeitseinstellung, welche für die verbundenen Bahnen bestimmt wurde, anzupassen.

9. Fördersystem nach Anspruch 7 und Anspruch 8, in welcher die Einrichtung zum Auswählen einer neuen gewünschten Zeit eine Vorrichtung zum Auswählen der neuen Zeit in Abhängigkeit von der gewünschten Lücke umfaßt, die zwischen den Packungen vorgesehen ist.

10. Fördersystem nach Anspruch 9, in welchem die gewünschte Lücke konstant für alle Packungen ist.

11. Fördersystem nach einem der Ansprüche 1 bis 10, in welchem die Einrichtung zum Überwachen der Bewegung der Packungen eine Packungspositionssensorvorrichtung (110, 114) zum Ermitteln des führenden und des folgenden Randes der Packungen auf jeder Fördereinrichtung, und Vorrichtungen zum Bestimmen des Abstandes der Mitte zwischen diesen Rändern von der verbundenen Entladeeinrichtung umfaßt.

12. Fördersystem nach Anspruch 11, in welchem die Vorrichtung zum Überwachen weiterhin eine Einrichtung (112, 116) zum Messen der Bewegung von jeder Fördereinrichtung einschließt.

## Revendications

1. Un système de convoyeur comprenant: une première ligne de transport (32) pourvue d'un moyen de transport (46a, b, c) de paquets pour transporter des paquets et d'un moyen de décharge (46d) pour décharger des paquets depuis ladite première ligne de transport; une deuxième ligne de transport (34) pourvue d'un moyen de transport (48a, b, c) de paquets pour transporter des paquets et d'un moyeu de décharge (48d) pour décharger des paquets depuis la deuxième ligne de transport; un moyen récepteur (40) associé aux moyens de décharge des deux lignes pour recevoir des paquets déchargé des deux lignes de transport; un moyen de commande (44) pour commander les deux lignes de transport, le moyen de commande comprenant un moyen (82, 88) de commande de la vitesse de chacun des moyens de transport, un moyen (110, 116) de surveillance du déplacement des paquets sur chacune des lignes de transport et d'actionnement dudit moyen de commande de vitesse de manière à amener des paquets à parvenir au moyen de décharge à des instants qui créent des intervalles entre des paquets reçus par le moyen récepteur, caractérisé en ce que le moyen de commande inclut en outre un moyen de détermination de l'instant où un paquet de chacune des lignes atteindrait le moyen de décharge associé lorsque le convoyeur associé se déplace à la vitesse actuelle, un moyen de détermination de l'ampleur de l'ajustement de vitesse, qui serait nécessaire pour que chaque moyen de commande de vitesse amène le paquet de chacune des lignes à atteindre le moyen de décharge associé à un instant souhaité, et de détermination du paquet qui atteindrait le moyen de décharge associé à l'instant le plus proche de l'instant souhaité, et un moyen amenant ledit moyen de commande de vitesse du moyen de transport, portant ledit paquet qui atteindrait le moyen de décharge associé à l'instant le plus voisin de l'instant souhaité, à ajuster la vitesse du moyen de transport associé, grâce à quoi des paquets sont réunis sur ledit moyen récepteur à partir des deux lignes de transport, en laissant des intervalles souhaités entre paquets.

2. Un système de convoyeur selon la revendication 1, dans lequel le moyen de commande de vitesse inclut un moyen de mise en oeuvre, au moins à deux vitesses de fonctionnement supérieures à zéro, de chacun desdits moyens de transport; et le moyen actionneur inclut un moyen de choix entre lesdites deux vitesses de fonctionnement de chacun des moyens de transport.

3. Un système de convoyeur selon la revendication 1 ou la revendication 2 dans lequel le moyen actionneur est un moyen de choix entre lesdites deux vitesses et une troisième vitesse pour chacun des moyens de transport, la troisième vitesse étant sensiblement nulle.

4. Un système de convoyeur selon la revendication 1 ou la revendication 2 ou la revendication 3 dans lequel le moyen actionneur inclut en outre un moyen de commande du taux d'accélération des moyens de transport.

5. Un système de convoyeur selon l'une quelconque des revendications précédentes dans lequel le moyen de détermination détermine ledit instant souhaité en fonction de l'instant auquel un paquet précédent à décharger atteindrait son moyen de décharge associé et d'un intervalle souhaité à ménager entre paquets.

6. Un système de convoyeur selon la revendication 5 dans lequel ledit intervalle souhaité est constant pour tous les paquets.

7. Un système de convoyeur comprenant une série de lignes de transport (32, 34), chacune des lignes de transport comportant un moyen de transport (46a, b, c; 48a, b, c) de paquets pour transporter des paquets et un moyen de décharge (46d; 48d) pour décharger des paquets du moyen de transport, et un moyen de commande (44) pour commander les lignes de transport, le moyen de commande (44) comprenant un moyen (82, 88) de commande de la vitesse de chacun desdits moyens transporteurs, et des moyens (110, 112; 114, 116) de surveillance de déplacement de paquets sur chacun des moyens transporteurs, caractérisé en ce que le moyen de commande inclut en outre un moyen de détermination de l'instant où un paquet de chacune des lignes atteindrait le moyen de décharge associé lorsque le convoyeur associé se déplace à la vitesse actuelle, un moyen de détermination de l'ampleur de l'ajustement de vitesse, qui serait nécessaire pour que chaque moyen de transport amène le paquet de chacune des lignes à atteindre le moyen de décharge associé à un instant aussi proche que possible d'un instant souhaité sans dépasser un niveau prédéterminé d'accélération, un moyen de détermination d'une première ligne dont les paquets atteindraient le moyen de décharge associé à l'instant le plus voisin dudit instant souhaité et de choix d'un nouveau temps souhaité, pour des lignes autres que ladite première ligne, en fonction de l'instant estimé où le paquet de ladite première ligne parviendra au moyen de décharge associé.

8. Le système de convoyeur selon la revendication 7 incluant un moyen amenant le moyen de commande de vitesse à ajuster la vitesse actuelle du moyen transporteur en fonction de l'ajustement de vitesse déterminé pour les lignes associées.

9. Un système de convoyeur selon la revendication 8 dans lequel le moyen de choix d'un nouvel instant souhaité inclut un moyen de choix du nouvel instant en fonction de l'intervalle souhaité à ménager entre paquets.

10. Un système de convoyeur selon la revendication 9 dans lequel l'intervalle souhaité est constant pour tous les paquets.

11. Un système de convoyeur selon l'une quelconque des revendications 1 à 10 dans lequel le moyen de surveillance du déplacement des paquets inclut des moyens capteurs (110, 114) de position de paquets de manière à capter les bords avant et arrière de paquets sur chacune des lignes de transport et un moyen de détermination de la distance entre le centre, compris entre lesdits bords, et ledit moyen de décharge associé.

12. Un système de convoyeur selon la revendication 11 dans lequel le moyen de surveillance inclut en outre un moyen (112, 116) de mesure du déplacement de chaque moyen transporteur.
